# EUROPEAN PATENT APPLICATION

(11) **EP 1 244 337 A1**
(43) Date of publication of application: **25.09.2002**
(21) Application number: 01830190.3
(22) Date of filing: 20.03.2001
(51) Int. Cl.: H05B 41/24, H05B 41/282, H05B 41/288

(54) **Lighting system with an electrified line and a plurality of lighting fixtures connected to it**

(71) Applicant: MAGNETEK S.p.A., 52028 Terranuova Bracciolini (AR) (IT)
(72) Inventor: Canova, Antonio, 52025 Montevarchi, Arezzo (IT); Martini, David, 52028 S. Giovanni Valdarnono, Arezzo (IT); Becattini, Andrea, 52020 Cavriglia, Arezzo (IT)
(74) Representative: Mannucci, Michele

(57) **Abstract**

A description is given of a lighting system comprising an electrified line (1) and a plurality of lighting fixtures connected to the said line. Each of the said lighting fixtures (3) has a high intensity discharge (HID) lamp (L), associated with a power supply unit (5) comprising a first sub-group of the components of a power supply circuit, and in that the said electrified line (1) is associated with a power supply module (7) with the remaining electrical components of the power supply circuit which are common to all the lighting fixtures (3).

## Description

The present invention relates to a lighting system and more particularly to a system of the type comprising an electrified power line and a plurality of lighting fixtures connected to the said line.

Use is commonly made at present of lighting systems comprising an electrified supporting track to which spotlights or other lighting fixtures are connected mechanically and electrically. Normally, the lighting fixtures comprise incandescent lamps known as halogen lamps. The track can be electrified at mains voltage (220-230 V), in which case the halogen lamps connected to it are high-voltage lamps, or lighting fixtures comprising low-voltage (typically 12 V) lamps and a suitable transformer. In other cases the transformer is located at the end of the electrified track or in a suitable intermediate position, and the whole electrified track receives a low supply voltage (e.g. 12 V), in which case all the connected halogen lamps are of the low-voltage type.

Examples of electrified tracks are described in US-A-4866581 and EP-A-129325.

In certain applications, lamps of different types are also used for lighting public or industrial environments, in place of incandescent lamps. A type of lamp which is fairly commonly used at present is the HID (high intensity discharge) lamp. These lamps require a power supply at a high frequency, of the order of several hundreds of kHz. A power supply of this type consists of a mains voltage rectifier and an inverter. This electronic circuitry is at present incorporated in the lighting fixture to which the lamp belongs, together with other circuit components such as the power factor control circuit, the EMI filter, and the like.

The object of the present invention is to provide a lighting system which makes use of high intensity discharge lamps and which has the advantages of the lighting systems having a plurality of lighting fixtures which at present use incandescent halogen lamps.

A further object of the present invention is to provide a lighting system of the aforesaid type which is more economical and which makes it possible to increase the average life of the electronic components of the power supply circuits of the discharge lamps.

These and other objects and advantages, which the following text will make clear to those skilled in the art, are essentially achieved with a lighting system comprising an electrified line and a plurality of lighting fixtures connected to said line, in which each of said lighting fixtures has a high intensity discharge lamp, associated with a power supply unit comprising a first sub-group of the components of a power supply circuit, and in which the said electrified line is associated with a power supply module with the remaining electrical components of the power supply circuit which are common to all the lighting fixtures.

Many advantages are obtained in this way. On one hand, the overall cost of the system is reduced, since some of the components of the power supply circuits of the HID lamps are common to all the lighting fixtures. On the other hand, the overall dimensions of each lighting fixture are reduced, so that the appearance of the system is improved.

In a particularly advantageous embodiment of the invention, the power supply module associated with the electrified line and comprising the components common to the different lighting fixtures can have an EMI filter, a rectifier bridge and a power factor control circuit. It is also possible to make this module additionally incorporate the electrolytic capacitors normally provided in the power supply ballasts of the individual HID lamps. Thus a continuous voltage of the desired value is supplied to the electrified line. Each lamp or fixture is associated with an inverter to generate an alternating voltage at high frequency, usually of the square wave type, in a known way, for the supply of the lamp. The electrolytic capacitors are the most ageing-sensitive components of the whole set of system components. They are thus located at a distance from the lamps and therefore they are not subject to the negative effect of temperature on their average life. A doubling of the life of these components has been found, and this provides a further advantage.

In a different embodiment of the invention, the power supply module associated with the electrified line comprises, in addition to the components indicated above, an inverter circuit to supply a high-frequency alternating voltage to the electrified line. In this case, each power supply unit of the various lamps can be associated with a controlled impedance or other suitable means for limiting the load current to the corresponding lamp.

Theoretically, the system can comprise any electrified line, which can consist, for example, merely of the connecting wires of the various lighting fixtures. In a particularly advantageous embodiment of the invention, however, the electrified line is contained in a support track for the lighting fixtures, which also forms the supporting structure of the lighting fixtures.

The invention will be more clearly understood from the description and the attached drawing, which shows, without restrictive intent, some practical embodiments of the invention. More particularly,
Fig. 1 shows a general diagram of a system according to the invention;
Fig. 2 shows a block diagram of the power supply module associated with the electrified line and comprising the components common to the various lighting fixtures, in a first embodiment;
Fig. 3 shows a block diagram of the power supply unit associated with one of the lighting fixtures;
Fig. 4 shows a diagram similar to the diagram of Fig. 2, in a different embodiment; and
Fig. 5 shows a block diagram similar to the diagram of Fig. 3, in this different embodiment.

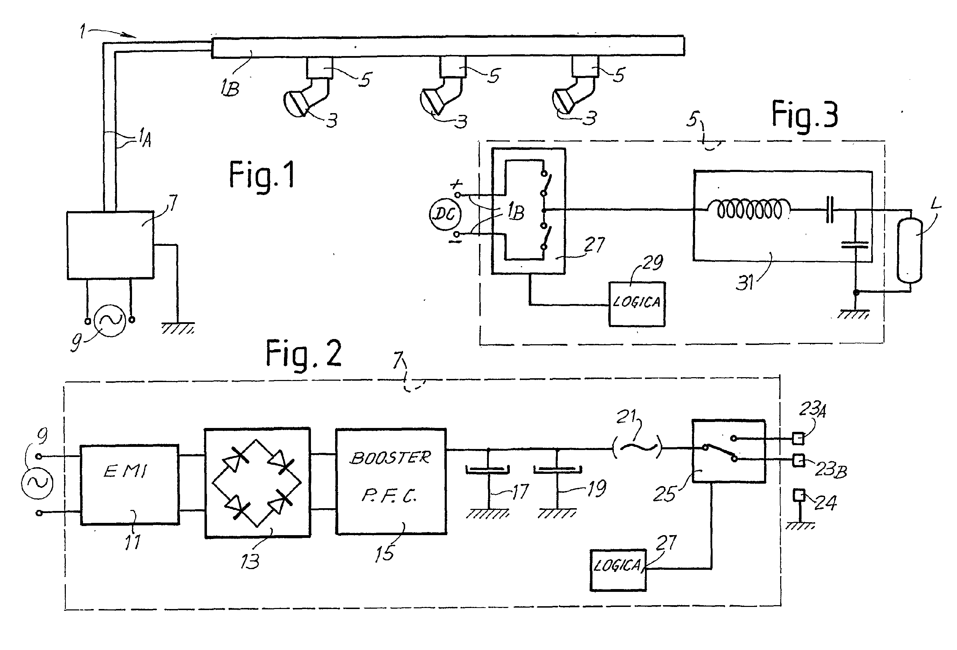

Fig. 1 shows in a general and schematic way the system according to the invention. The number 1 indicates an electrified line of a general type which, in the illustrated example, has an electric wire 1A and an electrified track 1 B, in other words a mechanical supporting structure which houses the electrical connectors which supply the power to the lighting fixtures. The latter are indicated by 3 and each of them is provided with a power supply unit indicated schematically by 5. In the illustrated example there are three identical lighting fixtures, but it is to be understood that their number and type can be different. Generally, however, each lighting fixture will have an HID lamp.

The electrified line 1 is associated with a power supply module 7 which is connected to the normal external electrical power supply line 9 at 230 V or at another voltage, according to the provision made in the country in which the equipment is used.

According to the invention, the electronic power supply circuit of the individual lighting fixtures 3 is divided into a common part, contained in the power supply module 7, and a part dedicated to each individual lighting fixture, housed in the power supply unit 5. Figs. 2 and 3 show a first example of embodiment, in which the components are made and divided in such a way that a continuous voltage, of 400 V for example, is supplied to the electrified line 1. In this case, the power supply module 7, shown schematically in Fig. 2, incorporates an EMI filter 11, a rectifier bridge 13, a booster circuit for controlling the power factor, indicated in a general way by 15, a set of electrolytic capacitors 17, 19, and a protective fuse 21 or other equivalent component for protection against short circuits. A switch 25, enabling one or other of two outputs 23A, 23B to be connected to the power supply, is also provided. The number 24 indicates the earth. The electrified line 1 is connected electrically to the terminals 23A, 23B and 24, and has two conductors (connected to the outputs 23A, 23B) which are supplied alternatively. The lighting fixtures connected to the electrified line 1 can be connected alternatively to the output 23A or to the output 23B, or to both if required. A logic 27 is used to control the switch 25 in such a way as to connect one or other of the outputs 23A, 23B to the power supply. Thus, by providing the lighting fixtures with the desired connections, it is possible to divide the fixtures into groups which can be turned on or off according to the states of the switch 25.

Fig. 3 shows the corresponding block diagram of the power supply unit 5 associated with each lighting fixture 3. It has a pair of controlled switches in a half-bridge arrangement 27, controlled by a logic 29 which causes their switching. The half-bridge 27 receives at its input the continuous voltage from the line 1, or more precisely, in the illustrated example, from the electrified track 1B, and generates a square-wave alternating voltage at a high frequency, of the order of 400 kHz for example, although this value is to be understood as an example only. The number 31 indicates an oscillating load circuit to which the lamp L itself is connected.

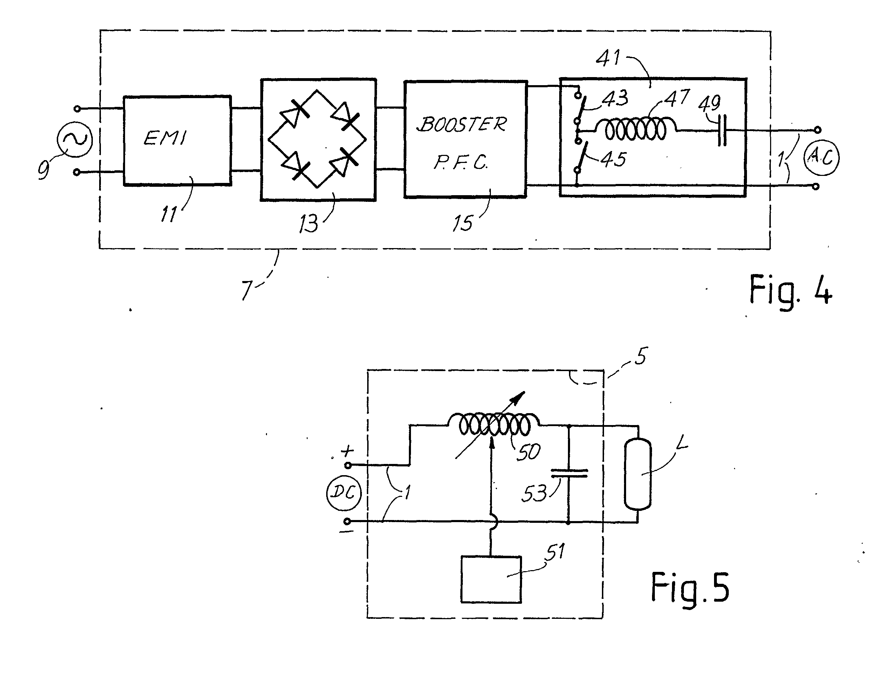

Figs. 4 and 5 show two block diagrams of the module 7 and the power supply unit 5 in a different configuration in which a high-frequency voltage is supplied on the electrified line 1. Identical numbers indicate parts which are identical or correspond to those illustrated in Figs. 2 and 3. The power supply module 7 houses components equivalent to those of Fig. 2, together with an inverter 41 with a half-bridge arrangement of controlled switches 43, 44 and an LC oscillating circuit 47, 49. However, each individual power supply unit 5 has a variable inductance 50 controlled by a logic 51 to limit the load current supplied to the lamp L, and also a capacitor 53 in parallel with the lamp L.

In this second configuration, a voltage at a frequency higher than the mains frequency is present on the electrified line 1, while each lighting fixture is associated with a means of limiting the load current, represented (by way of example) by the variable inductance 50.

It is also possible to use different configurations, for example those which are intermediate between the two cases shown. In both configurations, the power supply module 7 and the individual power supply units 5 can comprise further components and circuits of known types to carry out other typical functions of power supply circuits for HID lamps. These components and circuits are omitted for the sake of simplicity and their construction is within the capacity of persons skilled in the art on the basis of what is known at present of the construction of power supply circuits for individual HID lamps.

It is to be understood that the drawing shows only certain possible embodiments of the invention, which can be varied in its forms and arrangements without departure from the scope of the essential concept of the invention. The presence of any reference numbers in the attached claims does not limit their protective scope and has the sole purpose of facilitating their reading with reference to the preceding description and to the attached drawings.

## Claims

1. Lighting system, comprising an electrified line (1) and a plurality of lighting fixtures connected to the said line, **characterized in that** each of the said lighting fixtures (3) has a high intensity discharge (HID) lamp (L), associated with a power supply unit (5) comprising a first sub-group of the components of a power supply circuit, and **in that** the said electrified line (1) is associated with a power supply module (7) with the remaining electrical components of the power supply circuit which are common to all the lighting fixtures (3).

2. System according to Claim 1, **characterized in that** said power supply module (7) comprises an EMI filter (11), a rectifier bridge (13) and a power factor control circuit (15).

3. System according to one or more of the preceding claims, **characterized in that** said power supply module comprises one or more **electrolytic capacitors (17, 19).**

4. System according to Claim 1 or 2 or 3, **characterized in that** said power supply module supplies a continuous voltage to said electrified line and **in that** each of said power supply units (5) comprises an inverter (27) to generate an alternating voltage for the supply of the corresponding lamp (L).

5. System according to Claim 4, **characterized in that** said electrified line is supplied with a continuous voltage in the range from 260 to 400 V.

6. System according to Claim 1 or 2 or 3, **characterized in that** said power supply module also comprises an inverter circuit (41) to supply a high-frequency alternating voltage to the electrified line, and **in that** each of said power supply units comprises a means for limiting the load current to the corresponding lamp.

7. System according to Claim 6, **characterized in that** said means for limiting the load current comprises a controlled impedance (50).

8. System according to Claim 6 or 7, **characterized in that** the voltage supplied to said electrified line has a frequency higher than the mains frequency.

9. System according to one or more of the preceding claims, **characterized in that** said electrified line is contained in a track which supports the lighting fixtures.

10. System according to one or more of the preceding claims, **characterized in that** said electrified line comprises a plurality of connectors and **in that** said power supply module has a plurality of outputs connectable alternatively to said connectors, to supply groups of different lighting fixtures associated with said electrified line.
